# EUROPEAN PATENT APPLICATION

(11) **EP 1 067 539 A1**
(43) Date of publication of application: **10.01.2001**
(21) Application number: 00305797.3
(22) Date of filing: 10.07.2000
(51) Int. Cl.: G11B 19/20, H02K 7/04

(54) **Disk drive device having mass eccentricity compensation mechanism**

(30) Priority: 09.07.1999 JP 19665299
(71) Applicant: Mitsumi Electric Company Ltd., Chofu-shi Tokyo (JP)
(72) Inventor: Takeuchi, Toshio, c/o Mitsumi Electric Co.,Ltd., Tokyo (JP)
(74) Representative: Moir, Michael Christopher

(57) **Abstract**

In order to provide a disk drive device with higher stability wherein a stable high-speed playback or writing is ensured upon a mass eccentric disk, the disk drive device comprises mass-eccentricity detection means for detecting a mass-eccentric rotation of the disk clamp or disk itself and mass-eccentricity compensation means for compensating the mass eccentricity based on a mass-eccentricity detection signal from the mass-eccentricity detection means.

## Description

### BACKGROUND OF THE INVENTION :

### 1. Field of the Invention

The present invention relates to a disk drive device for playing back or recording and playing back information on a CD-ROM or an optical disk.

### 2. Description of the Related Art

Conventionally, a disk drive device of this type is typically driven by placing an optical disk on a drawable tray thereof so that the recording surface of the optical disk faces downward, and then inserting this tray into the disk drive device. In the disk drive device, the inserted optical disk is moved upward by a turntable which comes up through a hole formed in the tray from the bottom surface side of the tray base. The optical disk lifted by the turntable is pressed against a rotatable disk clamp which is opposed to the turntable via the optical disk. As a result, the optical disk is held between the turntable and the clamp upon the both sides of the optical disk. As the motor rotates the turntable, the optical disk is turned and positioned at the turntable side, and then recording or playback of the information written on the optical disk is carried out by an optical head which can be moved in a radial direction of the optical disk.

The conventional disk drive device as mentioned above is deficient in that a mass eccentricity of a loaded disk causes irregular rotations such as wobbling, and therefore proper rotation and correct reading are not provided. In particular, higher-speed rotation accelerates this tendency.

In the prior art, countermeasures as listed below have been made to address the problem caused by the mass eccentricity.

In order to reduce a vibration amplitude of the mechanism which may occur when the disk is rotated at a high speed, some methods have been provided for reducing the vibration amplitude by allowing the center of mass of the rotating part of the mechanism to be variable. More specifically, these methods includes a method of reducing vibrations of the mechanism, comprising steps of adding a fluid or a plurality of metal balls into the inside of a disk table of the spindle motor (SPM) for driving the turntable, and axially aligning the center of the rotation with the center of the disk through the use of the fact that the fluid or metal balls are biased by the eccentricity associated with the high speed rotation of the mass eccentricity disk.

However, such a conventional method wherein the mass of the mechanism itself increases leads to mass enhancement obviously, and therefore can not accommodate a high speed disk rotation.

In addition, in accordance with the conventional method wherein a disk table accommodates therein a fluid or metal balls, sufficient effectiveness can not be expected when the disk drive device itself is mounted on an inclined surface or on a moving matter, e.g. a vehicle.

Further, the aforementioned method has another deficiency, namely, that even if the disk drive device itself is located on a horizontal place, stability is not provided during high-speed rotation because the metal balls or fluid are not restricted, and therefore the inherent effectiveness is not exerted.

### SUMMARY OF THE INVENTION

It is an object of the preferred embodiments of the present invention to provide a disk drive device with higher stability wherein a stable high-speed playback or writing is ensured with a mass-eccentric disk.

In accordance with the present invention, there is provided a disk drive device for playing back or recording information from a disk. The disk drive comprises a rotating shaft of a spindle motor, a turntable provided at one end of the rotating shaft, and a clamp which is arranged to be opposed to the turntable, in which the turntable and the clamp holding the center portion of the disk therebetween when loading the disk. In the present invention, the disk drive device further comprises mass eccentricity detection means for detecting a mass-eccentric rotation of the disk clamp or the disk, and mass eccentricity compensation means for compensating the mass eccentricity based on a mass eccentricity detection signal from the mass eccentricity detection means.

### BRIEF DESCRIPTION OF THE DRAWINGS

Preferred features of the present invention will now be described, by way of example only, with reference to the accompanying drawings, in which:-
Fig. 1 is a cross-sectional view of a conventional disk drive device illustrated in a simplified form in a closed state;
Fig. 2 is a cross-sectional view of the conventional disk drive device of Fig. 1 illustrated in a simplified form in an open state;
Fig. 3 is a perspective view of a disk drive device according to a first embodiment of the present invention;
Fig. 4 is a plan view of the disk drive device of Fig. 3 with a casing of the device body removed, illustrating the state that a mechanical unit is at a downside position (i.e. lower position);
Fig. 5 is a plan view of the disk tray of Fig. 3;
Fig. 6 is a diagram showing a schematic structure of a supporting structure of a disk clamp of the present invention which has a similar structure as in conventional devices;
Fig. 7 is a perspective view illustrating essential parts of the disk driving mechanism according to the first embodiment of the present invention;
Fig. 8A is a perspective view illustrating the inside of the disk clamp of Fig. 7 with a flange part and an upper section on the flange part removed;
Fig. 8B is a plan view of the disk clamp shown in Fig. 8A;
Fig. 9A is a plan view illustrating a magnetic-field-applying mechanism of the disk clamp shown in Fig. 7;
Fig. 9B is a plan view illustrating a contact substrate for electrically connecting to the magnetic-field-applying mechanism of Fig. 9A;
Fig. 9C is a partial cross-sectional view illustrating an electrical connection between the magnetic-field-applying mechanism of Fig. 9A and the contact substrate of Fig. 9C;
Fig. 9D is a partial cross-sectional side view illustrating an electrical connection between the magnetic-field-applying mechanism of Fig. 9A and the contact substrate of Fig. 9B;
Fig. 9E is an exploded perspective view of the assembly of the magnetic-field-applying mechanism;
Fig. 10A is a plan view illustrating a magnetic-field-applying mechanism of a disk driving mechanism according to a second embodiment of the present invention;
Fig. 10B is a cross-sectional side view mainly illustrating the disk clamp part;
Fig. 11A is a plan view illustrating a magnetic-field-applying mechanism of a disk driving mechanism according to a third embodiment of the present invention with a top plate removed;
Fig. 11B is a cross-sectional side view mainly illustrating the magnetic-field-applying mechanism;
Fig. 12A is a plan view mainly illustrating a magnetic-field-applying mechanism of a disk driving mechanism according to a fourth embodiment of the present invention;
Fig. 12B is a cross-sectional side view of the disk driving mechanism shown in Fig. 12A;
Fig. 13A is a view illustrating a disk clamp of a disk driving mechanism according to a fifth embodiment of the present invention with a flange part at a top removed;
Fig. 13B is a plan view of the disk drive device shown in Fig. 13A;
Fig. 14 is a plan view in horizontal section of a disk clamp of a disk driving mechanism according to a sixth embodiment of the present invention;
Fig. 15 is a sectional side view of a magnetic-field-applying mechanism of a disk driving mechanism according to a seventh embodiment of the present invention;
Fig. 16A is a plan view illustrating essential parts of a clamp part of a disk driving mechanism according to a eighth embodiment of the present invention;
Fig. 16B is a sectional side view of a clamp part of a disk driving mechanism according to the eighth embodiment of the present invention;
Fig. 17A is a plan view illustrating essential parts of a clamp part of a disk driving mechanism according to a ninth embodiment of the present invention; and
Fig. 17B is a sectional side view illustrating the essential parts of the disk driving mechanism shown in Fig. 17A.

### DESCRIPTION OF THE PREFERRED EMBODIMENTS:

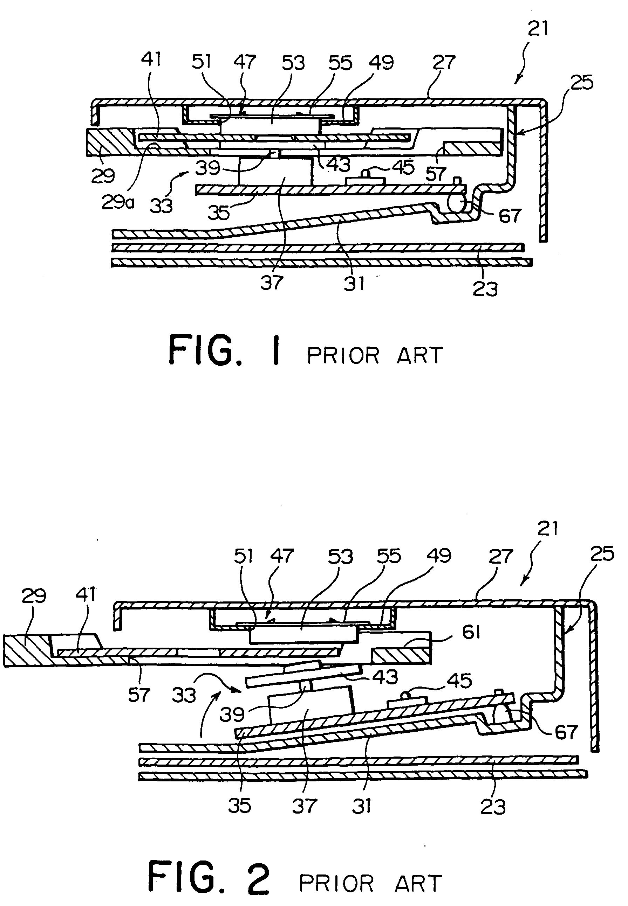

For the sake of facilitating the understanding of the invention, conventional disk drive devices will now be explained in connection with Figs. 1 and 2 before describing embodiments of the present invention.

Referring to Figs. 1 and 2, a device body 21 of the disk drive device comprises a circuit substrate assembly 23 and a mechanism assembly 25 disposed on the circuit substrate assembly 23 both of which are housed in a casing 27.

This casing 27 is constructed from a thin metal plate or the like. At the front end of the casing 27, a front bezel including an opening not shown is mounted. A disk tray 29 is adapted to be taken out of and inserted into the device main body 21 through this opening.

In addition, as shown in Figs. 1 and 2, the assembly 25 comprises a chassis 31 and a mechanical unit 33 which is supported on the chassis 31. This mechanical unit 33 includes a base member 35 which has a front portion and a rear portion. The base member 35 is rotatably supported at the rear portion by the chassis 31 so that the base member 35 can be displaced between a state in which the front portion is at an upper position as shown in Fig. 1 and a state in which the front portion is at an lower position as shown in Fig. 2. On this base member 35, generally, a spindle motor 37 for rotation, a turn table 43 which is fixed to a rotating shaft 39 of the spindle motor 37 and bears thereon an optical disk 41, an optical head (including an actuator) 45 for playback or both recording and playback of information on a optical disk 41, and an optical head moving mechanism (not shown) for moving the optical head 45 in the radial direction of the optical disk 41 are provided.

Above the chassis 31, a disk clamp 47 is provided so as to be able to rotate and vertically (upward and downward) displace to the position where the disk clamp 47 is opposed to the turntable 43 when the base member 35 is displaced to the upper position thereof. This disk clamp 47 is rotatably supported on a support member 49 like a plate in which an opening is formed in the center.

This disk clamp 47 comprises a flat drum-like body 53 which has a base and is fitted into an opening of the support member 49, and a flange part 55 which is formed around the upper periphery of the body 53 and rested against the upper surface of the support member 49. The main body 53 includes therein an annular attracted member made of steel so that the main body 53 is attracted to a permanent magnet embedded in a turntable 43.

With the disk drive device mentioned above, as the disk tray 29 on which the optical disk 41 is placed moves from the disk removable position to a disk loaded position, the base member 35 moves from the downside position (Fig. 2) to the upside position (Fig. 1). On the other hand, for ejecting the disk 41, the base member 35 first moves from the upside position (Fig. 1) to the downside position (Fig. 2), and then the disk tray 29 moves from the disk loaded position to the disk removable position.

When the base member 35 is at the upside position, as shown in Fig. 1, the turntable 43 moves upward away from a disk supporting portion 29a of the disk tray 29 through the opening 57 to raise the disk 41 so that the disk can rotate. In this state, the disk clamp 47 is attracted to the magnet embedded in the turntable 43, and consequently the disk 41 is held between the disk clamp 47 and the turntable 43. At this time, as shown in Fig. 1, the flange part 55 of the disk clamp 47 is clear of the upper surface of the support member 49.

On the other hand, when the base member 35 moves to the downside position, the turntable 43 is, as shown in Fig. 2, moved away from the disk clamp 47 and the flange part 55 of the disk clamp 47 is rested against the upper surface of the support member 49. With the base member 35 positioned at the downside position, the end of the body 53 of the disk clamp 47 which is nearer to the turntable is partly projecting into the concave which is served as the disk supporting portion 29a of the disk tray 29.

Preferred embodiments of the present invention will now be described hereinafter with reference to the drawings.

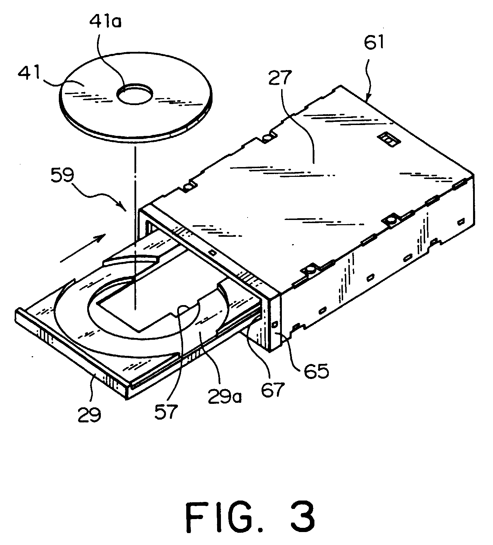

Referring to Fig. 3, a disk drive device 59 in accordance with a first embodiment is a device, such as a CD-ROM drive and a CD-R drive for playback or for recording and playback of information on the optical disk 41. The disk drive device is configured to have therein the disk tray 29 which moves backwards and forwards (horizontally) with respect to a main body 61 in order to carry the optical disk 41. The disk tray 29 has the disk supporting portion 29a for supporting the optical disk 41 thereon.

This main body 61 comprises a circuit substrate assembly (not shown) and a mechanism assembly 63 disposed on the circuit substrate assembly, and both of which are contained in the casing 27. This casing 27 is constructed from a thin metal plate or the like. At the front end of the casing 27, a front bezel having an opening 62 is mounted.

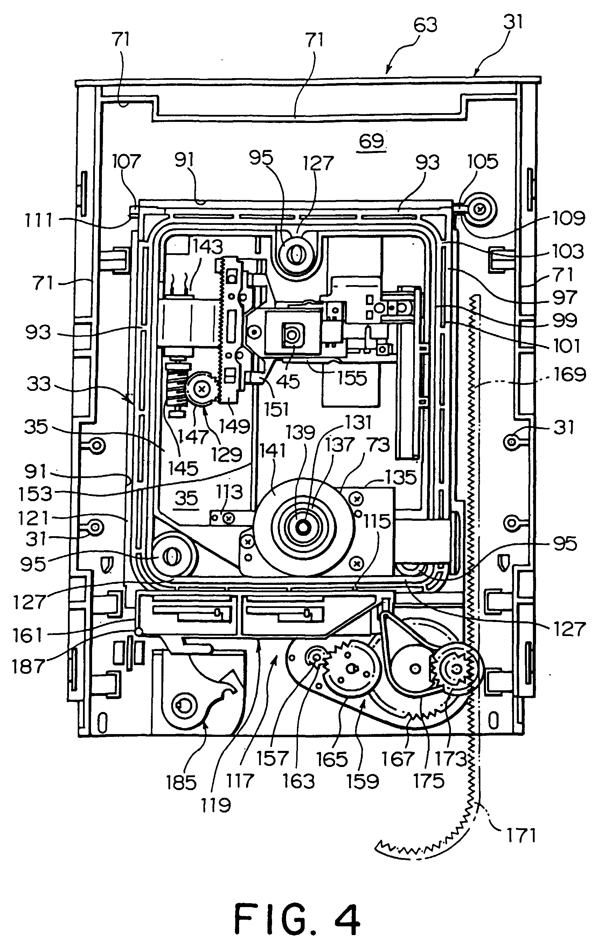

Referring now to Fig. 4, a mechanism assembly 63 incorporated in the casing 27 has the chassis 31 which is formed from a hard resin or the like. This chassis 31 consists of a substantially rectangular plate-like bottom portion 69 and a U-shaped wall portion 71 having surfaces projecting generally normal to the base along the left, right, and back edges thereof.

No wall portion is formed at the front side of the chassis 31. Therefore, this area is in an open state. When the mechanism assembly 63 is arranged within the casing 27, this open area of the chassis 31 is aligned with an opening 67 of a front bezel 65 which is mounted to the casing 27 (see Fig. 3), and there the disk tray 29 is allowed to be ejected and inserted through the opening 67.

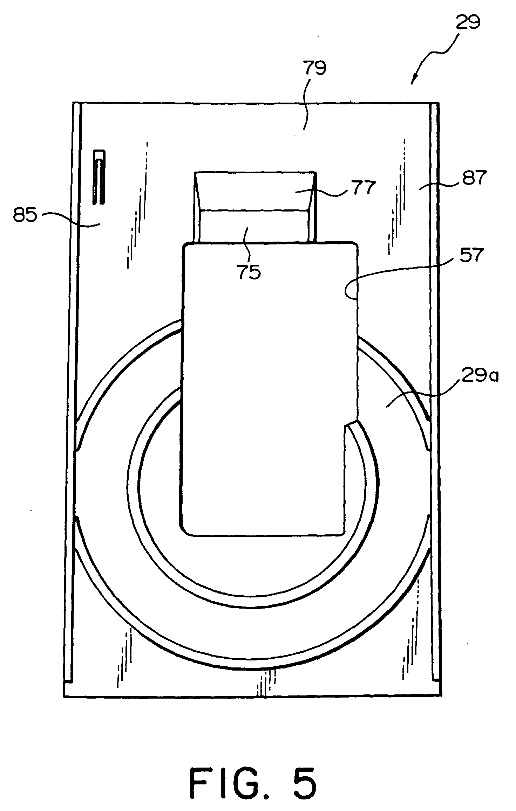

This disk tray 29 includes a shallow concave disk supporting portion 29 to receive therein the optical disk 41 as shown in Fig. 3 and Fig. 5. The disk 41 is placed on the disk supporting portion 29a of this disk tray 29 and carried from the disk removable position to the disk playback position (disk loaded position) with the disk restrained in position.

Additionally, the disk tray 29 has a generally rectangular opening 57 which is formed in the disk supporting portion 29a so as to be extended from the approximately central region towards the rear side thereof (the upper part of Fig. 5). A turntable 73 and the optical head 45 are adapted to be located under the opening 57 when the disk tray 29 is at the disk playback position, and whereby the optical head 45 is allowed to move in the radial direction of the optical disk 45 through the opening 57.

This disk tray 29 comprises, as shown in Fig. 5, a recess 75 formed behind the opening 57, an inclined surface 77 formed behind the recess 75, and a reinforcing part 79 formed behind the inclined surface 77 and at the rear end of the disk tray. As described in detail below, when the disk tray 29 moves from the disk playback position to the disk removable position, the inclined surface 77 thrusts up a disk clamp 81 so that the clamp 81 is displaced upward, whereby the disk clamp 81 is placed on the reinforcing part 83.

The recess 75 is made lower enough than horizontal parts 85 and 87 at the both sides of the recess 75 so that the disk tray 29 does not contact with the disk clamp 81 when the disk tray 29 moves from the disk playback position to the disk removable position. In addition, both the recess 75 and inclined surface 77 have a width somewhat larger than the diameter of a main body 89 of the disk clamp 81 in order not to interfere with the movement of the disk tray 29.

As shown in Fig. 4, the chassis 31 described above comprises the turntable 73 on which an optical disk is placed, and the mechanism unit 33 having components, such as the optical head 45 for playing back or for both recording and playing back the disk 41. This mechanism unit 33 is arranged so as to be contained within a generally rectangular opening 92 formed in the bottom portion 69 of the chassis 31, and the rear portion of the mechanism unit 33 is rotatably supported by the chassis 31 so that the front portion thereof can be displaced between the upside position (upper position) in which the optical disk 41 is supported on the turntable 73 and the downside position (lower position, see Fig. 4) located lower than the upside position.

More specifically, as shown in Fig. 4, the mechanism unit 33 preferably has a base frame 93 formed from a hard resin, and a holding member 35 supported against the base frame 93 via an elastic member 95.

The base frame 93 is formed so as to have a generally rectangular frame which includes a front portion and a rear portion. This base frame 93 comprises a rectangular outer frame 97, a generally rectangular inside frame 99 which is a little smaller than the outer frame 97 and whose corners are rounded like a circular arc, a connection part 101 which is disposed at approximately midpoint in the height direction between the outer frame 97 and the inner frame 99 in order to connect therebetween, and a plurality of stiffening ribs spaced around the complete perimeter of the connection part 101 by a predetermined amount. Accordingly, the base frame 93 is configured as a so-called rudder frame wherein the recesses and the reinforcing parts are alternated between the outer frame 94 and the inner frame 99.

When this base frame 93 is simply constructed of a hard resin to have a thick wall, deformation may be caused during cooling after the base frame 93 is formed. Such deformation can be avoided by configuring the base frame 93 as the rudder frame as mentioned above, and further, a light-weight and high-strength frame can be obtained owing to resin molding.

At the both left and right sides of the rear portion of the base frame 93 (i.e. the farthest part away from the front of the device main body 61), axes 105 and 107 for pivotal movement with respect to the chassis 31 of the mechanism unit 33 are formed respectively so as to extend therefrom. These axes 105 and 107 are inserted into axis holes 109 and 111 formed in the chassis 31, respectively. This allows the rear portion of the mechanism unit 33 to be rotatably supported with respect to the chassis 31. The mechanism unit 33 is adapted such that when the mechanism unit 33 (the base frame 93) pivots around the axes 105 and 107, the front portion is displaced upwards and downward between the downside position as shown in Fig. 4 and the upside position located higher than the downside position.

The base frame 93 has one pair of projecting guide pins 113 and 115 at the front part thereof. These guide pins 113 and 115 are adapted to be engaged with a cam groove of a cam mechanism 119 of a loading mechanism 117 through a pair of vertical guide slot (not shown) formed in a front wall which partly defines the opening of the chassis so as to corresponding to the respective guide pins 113 and 115, and to vertically guide the front portion of the base frame 93 owing to the displacement of the cam member 119.

The base frame 93 which is configured as mentioned above and the chassis 31 which defines the opening 91 have a certain gap 121 therebetween. This gap 121 is formed to extend almost the entire perimeter of the base frame 93 and has a width which is set to the extent that the turn of the base frame 93 is not inhibited even if the chassis 31 is deformed to the maximum.

The holding member 35 consists of a generally rectangular bottom portion 123 and walls 125 which are formed about the periphery of the bottom portion 123, and has a size a little smaller than that of the inner frame 99 of the base frame 93 so as to be contained within the inner frame 99 of the base frame 93 through the predetermined gap 121. This holding member 35 is supported on the base frame 93 via elastic members 95. The elastic members 95 are respectively placed around tabs 127. One of the tabs 127 is disposed at the approximate center of the rear portion of the base frame 93 so as to project inwardly. Other tabs 127 are formed at the left and right corners of the front portion of the base frame 93. That is, the holding member 35 is supported by the base frame 93 through the elastic member 95 at the three points which substantially occupy the vertex sites of a generally isosceles triangle.

Besides, the holding member 35 includes a spindle motor 131 (not shown) for rotating the turntable 73, the turntable 73 fixed to a rotating shaft 133 of the spindle motor 131, the optical head 45 (including an actuator), and an optical head moving mechanism for moving the optical head 45 in the radial direction of the optical disk 41.

The spindle motor 131 is mounted on a motor supporting part 133 which is shaped like a metal plate fixed to the holding member 35. The spindle motor 131 is capable of rotating the optical disk 41 at a high rotational speed, for example, at 180-300 rpm.

The turntable 73 is a disk-shaped member and has a center or central hub 137 at center thereof. The center hub 137 consists of an annular projection. This center hub 137 is also provided for fitting within a center hole 41a of the optical disk 41. In order to compensate for misalignment when fitting, the hub 137 is tapered from the distal end to the proximal end thereof, and contains therein a spring so that the center hub 137 is allowed for vertical movements. In addition, an annular permanent magnet 139 for attracting a disk clamp 81 described later is placed at a location that is inside the center hub 137 and around the rotating shaft 133 of the spindle motor.

Further, an annular pad 141 is bonded onto the upper surface (the disk 41 supporting side) of the turntable 73 around circumference of the center hub 137. This pad 141 is made of an elastic material, such as various rubbers, soft resins or porous materials (foam) having a relatively high coefficient of friction, and thereby functions to prevent slippage of the optical disk 41 during holding and rotating the optical disk 41.

The optical head 45 is a flat type optical head constructed so as to deflect the light reflected from the optical disk 41 approximately 90 degrees though a use of a mirror (or prism) or the like in order to guide the light toward a photoreceptor.

As shown in Fig. 4, an optical head moving mechanism 129 comprises generally a DC motor 143 capable of forward/reverse rotation (hereinafter referred to as a thread motor), a worm gear 145 (hereinafter referred to as a lead screw) which is fixed on the rotating shaft of the thread motor 143, a worm wheel 147 which meshes with the lead screw 145, a rack gear 149 which meshes with a small diameter pinion gear (not shown) which is formed coaxially and integrally with the worm wheel 147, a slider 151 which is fixed to the rack gear 149, a guide rod 153 which regulates the moving direction of the slider 151, and a head support 155 which is integrally formed with the slider 151 and adapted to support thereon the optical head 45. The lead screw 145 and the guide rod 153 are arranged in such a manner that their lengthwise direction is substantially coincident with the forward and backward direction of the disk drive device.

In this kind of an optical head moving mechanism 129, when the thread motor 143 is driven to rotate the lead screw 145 in a prescribed direction, this rotation is transmitted via each of the gears with the speed reduced to cause the slider 151 to move along the guide rod 153 in the forward and backward directions of the disk drive device 59, whereby the optical head 45 fixed to the head support 155 is also moved in the radial direction of the optical disk 41 placed on the disk tray 29.

The operations of the spindle motor 131 and the thread motor 143 are controlled together with a loading motor 157 described later by a control means (CPU) provided in a circuit substrate assembly (not shown).

As shown in Fig. 4, at the front portion of the mechanism unit 33, the loading mechanism 117 is provided which allows the mechanism unit 33 to displace between the downside position (Fig. 4) and the upside position and also allows the disk tray 29 to move between the disk playback position and the disk removable position. This loading mechanism 117 is provided so as to cooperate with the mechanism unit 33. The loading mechanism 117 includes a cam mechanism 119 arranged so as to be slidable between a first position and a second position which is located higher than the first position, and a driving mechanism 159 for driving the disk tray 29 and the cam mechanism 119.

When located at the first position shown in Fig. 4, the cam mechanism 119 operates so as to place the mechanism unit 33 at the downside position, while when located at the second position higher than the first position, the cam mechanism 119 operates to place the mechanism unit 33 at the upside position.

More specifically, this cam mechanism 119 has a cam member 161 which is arranged so as to be slidable between a first position and a second position in the sideways direction with respect to the chassis 31 (i.e., in the direction orthogonal to the direction of movement of the disk tray 29).

Further, a driving mechanism 159 of the loading mechanism 117 has a loading motor 157 which consists of a direct current (DC) motor capable of forward/reverse rotation provided in the bottom surface at the front portion of the chassis 31, a pinion gear 163 mounted on a rotating shaft of the loading motor 157, a medium-diameter second gear 165 which meshes with the pinion gear 163, and a large-diameter third gear 167 which meshes with a small gear (not shown) fixed coaxially below the second gear 167. Further, a small-diameter cylindrical portion is integrally formed on top of the third gear 167 so as to be coaxial therewith, with a small gear not shown being integrally formed on top of this cylindrical portion so as to be coaxial therewith. Meshing with the small gear of the third gear 167 is an actuating gear 173 which meshes with the first and second racks 169, 171 of the disk tray 29.

In accordance with the present embodiment, each of these gears is a spur gear, and the combination of these gears provides a deceleration mechanism of the loading motor 157 in the loading mechanism 117.

The actuating gear 173 is rotatably provided on a rotating shaft which is positioned on a planetary arm 175 mounted to a rotating shaft of the third gear 167.

The actuating gear 173 carries out a first operation when engaged with the first rack 169 of the disk tray 29, in which the disk tray 29 is moved between the disk removable position and the disk playback position with the gear being held at a prescribed position, and a second operation when engaged with the second rack 171 the disk tray 29, in which the cam member 161 is moved between the first position and the second position.

Besides, the disk clamp 81 is located on the upper portion of the chassis 31.

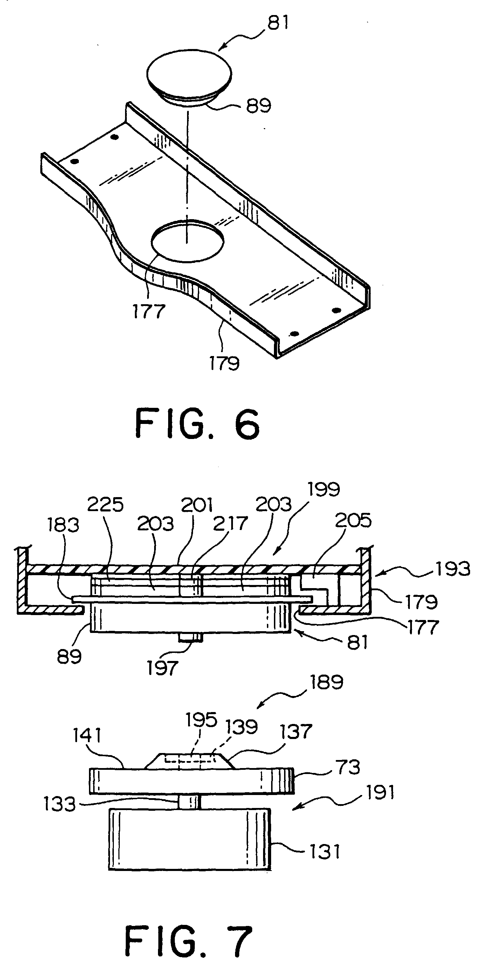

Referring now to Fig. 6, a schematic structure of a supporting structure of the disk clamp 81 is illustrated which has a similar structure as that of the typical conventional clamps. As is seen from Fig. 6, within the main body 61, the disk clamp 81 is supported on a plate-shaped support member 179 so that the disk clamp 81 is rotatable and movable upward and downward. The support member 179 includes therein a central opening 177 and extends between a pair of opposite walls of the chassis 31 at a location above the turntable 73.

In particular, the support member 179 is fastened at both ends with bosses or rivets to mounting points 181 of the chassis 31 so as to secure the support member 179 to the chassis 31 in the side-ways direction. On the other hand, the disk clamp 81 has a main body 89 like a flat drum including a base which is fitted into the opening of the support member 179, and a flange part 183 which is formed around the upper periphery of the main body 89 and rested against the upper surface of the support member 179. Further, an attracted steel member having a variety of shapes is placed on the bottom portion of the main body 89 and is adapted to be attracted by a permanent magnet 139 embedded in a turntable 73.

Besides, a member represented by reference number 185 in Fig. 4 is an emergency eject mechanism. When the loading motor optical disk comes to stop due to a power failure while the disk tray is located at the playback position, a jig is inserted from the outside of the main body 61 to pivot this cam and thereby the cam member 161 is moved from the second position to the first position, which allows the front edge the disk tray 29 to project outward from the inside of the main body 61.

A description of the operation of the drive device in accordance with the embodiment mentioned above will be given next. When an optical disk 41 is place on the disk supporting portion 29a of the disk tray 29 which is drawn from the disk drive device 59 through the opening 67 of the front bezel 65 and a loading operation is carried out, the loading motor 157 is rotated in a predetermined direction, whereby the actuating gear 91 is rotated via the deceleration mechanism in a counterclockwise direction (reverse rotation) given the orientation of Fig.4 Consequently, the disk tray 29 is moved backward (towards the farthest part away from the front of the disk drive device) through the apertures 67 to the disk playback position. In this way, the optical disk 41 which is placed in position on the disk tray 29 is also transported to the disk playback position within the device main body 61. During loading, that is, backward movement of the disk tray 29, the actuating gear 173 is engaged with the first rack 169 on the bottom surface of the disk tray 29, and a protrusion 187 disposed on the upper portion of the cam member is guided along the first movement restriction groove formed in the bottom surface of the disk tray. Accordingly, the cam member 161 is held at the first position, and therefore not allowed to move to the second position. As a consequence, the planetary arm 175 is held at a prescribed position so as to be unable to rotate, the actuating gear 173 rotates at the prescribed position and functions as a driving gear for driving the disk tray 29. In this state, the front portion of the mechanism unit 33 is held at the downside position.

When the disk tray 29 approaches the disk playback position, the protrusion 187 disposed on the cam member 161 moves from the first movement restriction groove formed in the bottom surface of the disk tray to the second movement restriction groove, thereby the cam member 55 is moved slightly in the sideways direction. The, when the disk tray 29 reaches the disk playback position, the protrusion 187 of the cam member 171 moves to a third movement restriction groove via the second movement restriction groove, thereby enabling the cam member 161 to move from the first position to the second position, which in turn also makes it possible for the planetary arm 175 to rotate. In this state, the actuating gear 173 is positioned at a transition point from the first rack 169 to the second rack 171.

As a result, in this state, the movement of the disk tray 29 is restricted whereas the planetary arm 175 is rotatable. Therefore, if the actuating gear 173 is rotated by the loading motor 157, then the actuating gear 173 rotates while moving along the arc-shaped second rack 171 and functions as a planetary gear.

When the actuating gear 173 functions as a planetary gear and moves along the arc-shaped second rack 171 as described above, the planetary arm 175 also rotates in accordance with the movement of the actuating gear 173 around the common axis in the clockwise direction given the orientation of Fig.4. When the planetary arm 175 rotates in this way, the second arm not shown of the planetary arm 175 also rotates in the same manner in the clockwise direction, thereby the cam member 161 is moved from the first position to the second position.

In accordance with the movement of the cam member 161, the guide pins 113 and 115 disposed at the front end of the base frame 99 of the mechanism unit 33 slide along the slanting grooves of the cam grooves and move upward to the upper grooves. Accordingly, the mechanism unit 33 is displaced from the downside position to the upside position, whereby the center hole 41a of the optical disk 41 transported to the disk playback position with placed on the disk tray 29 is engaged with the center hub 137 of the turntable 73 which is elevated through the opening 57 the disk tray 29. Then the disk clamp 81 is attracted by the permanent magnet 139 of the turntable 73, and therefore the optical disk 41 is held between the disk clamp 81 and the turntable 73.

If a switch such as a playback switch is manipulated under this state, the turntable 73 is rotated in association with the rotation of the spindle motor 131. In accordance with this rotation, the optical disk 41 is rotated and the information on the optical disk 41 is played back.

In order to remove the optical disk 41 when the playback operation of the optical disk 41 is finished or terminated, unloading (eject) of the optical disk is carried out by manipulating a prescribed switch. Unloading is carried out following the above steps in reverse.

The configuration of the disk drive device as mentioned above is substantially similar to that of the prior art.

The disk drive device in accordance with the present invention is different from conventional devices in the details of the structure of the disk driving mechanism.

Referring now to Fig. 7, a disk driving mechanism 189 for restraining and rotating an optical disk comprises a drive section 191 and a clamp section 193. The drive section 191 comprises a spindle motor 131 having a rotating shaft 133 and a turntable 73 provided at one end of the rotating shaft 133.

The turntable 73 has a central hub 137 over which a hole of a optical disk 41, such as a CD disk, is fitted, and a recessed portion 195 is provided at the center thereof around which a permanent magnet 139 is disposed. Further, a pad 141 is positioned around the permanent magnet 139.

On the other hand, the clamp section 193 has a disk clamp 81 which is positioned on the upper side of the support member 179 so as to partly pass through the opening 177 of the support member 179. The disk clamp 81 has a disk-shaped main body 89, and a flange portion 183 which is positioned at a top of the main body 89 and formed to have a diameter larger than that of the main body 89. The main body 89 has a protrusion 197 which is centrally disposed on the lower end face of the main body and projects downward (towards the turntable 73). This protrusion 108 is fitted in a center hole 195 of the turntable 73 when the optical disk 41 is received in the turntable.

Further, the clamp section 193 has a mass eccentricity compensation mechanism 199. The mass eccentricity compensation mechanism 199 comprises a controlling substrate 201 on which a control integrated circuit is mounted, a magnetic-field-applying mechanism 203 disposed on the top of the disk clamp 81, and an optical sensor 205. The optical sensor 205 detects a point of the perimeter of the disk clamp 81 which exhibits the largest outward radial displacement when the disk clamp 81 produces a mass eccentric rotation.

Then the controlling substrate 201 adjusts the magnetic field distribution of the magnetic-field-applying mechanism 203 based on a detection signal from the optical sensor 205.

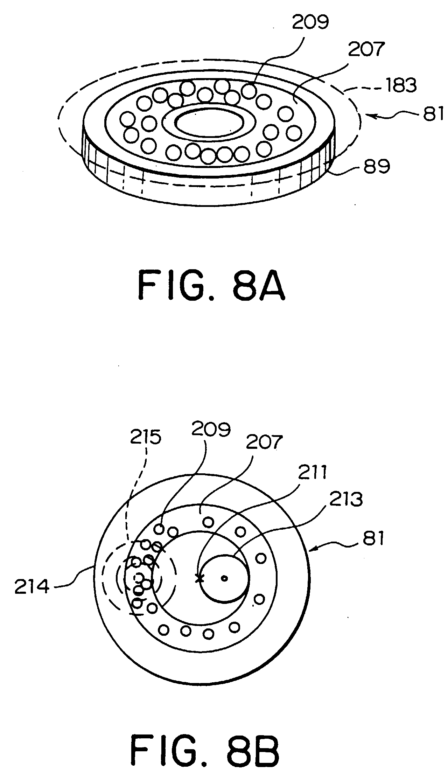

Referring to Figs. 8A and 8B, an annular groove 207 has a circular cross section and is formed within the disk clamp 81 where a large number of small steel or iron balls 209 are accommodated. In the case that the disk clamp 81 provides a mass eccentric rotation as indicated by reference number 213 when the center axis of the disk clamp is located at a position designated by 211, the mass eccentricity compensation mechanism 199 identifies, in combination with the detection by the optical sensor 205 (see Fig. 7), the portion where the outward radial displacement of the disk clamp 81 is large, for example, a portion indicated by reference number 215 in Fig. 8B, and then apply a magnetic field having a magnetic field intensity distribution as indicated by reference number 215 to the relevant portion through the magnetic-field-applying member 203 (see Fig. 7). Consequently, steel balls 209 move in the groove 207 formed within the disk clamp 81, and therefore the mass eccentricity is shifted toward the center axis 211 and properly compensated.

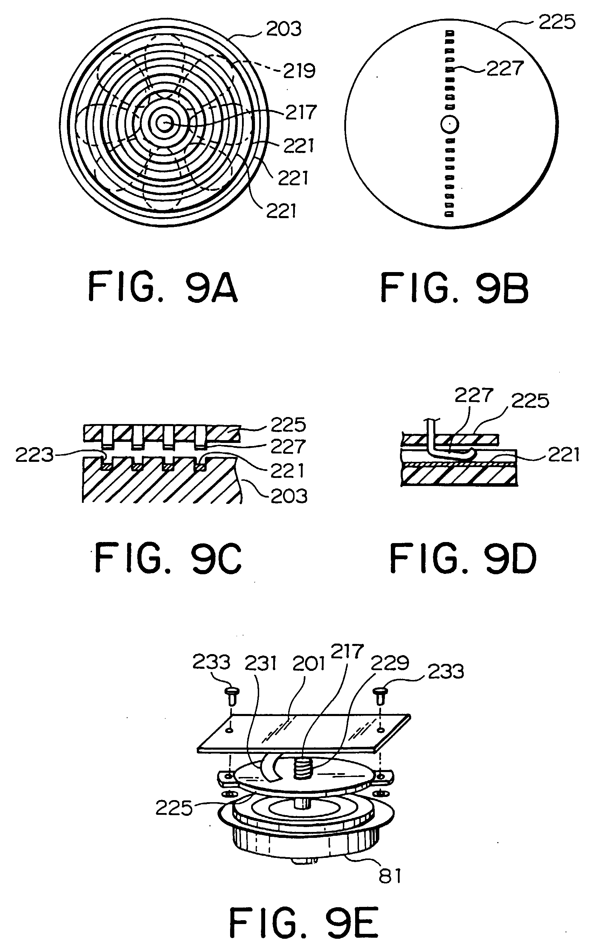

Referring to Fig. 9A, the magnetic-field-applying mechanism 203 has therein a plurality of electromagnetic coils which are arranged at an even angular space around the center axis 217. In addition, a plurality of grooves 223 each of which has an electrically conductive portion 221 at the inside bottom portion thereof are concentrically arranged at one face of the magnetic applying mechanism 203.

Referring now to Fig. 9B, a plurality of protruding small contacts 227 are formed at one face of the contact substrate 225 such that the contacts 227 are concentrically arranged in a radial direction with the same pitch as of the electrically conductive portions 221 of the magnetic-field-applying mechanism 203.

As shown in Figs. 9C and 9D, when assembled, the respective contacts 227 are received and accommodated in the respective grooves 223. At this time, as shown in Fig. 9E, a coil spring 229 which is disposed at one end of the axis 217 constantly biases the contact substrate 225 against one face of the magnetic-field-applying mechanism 203, and accordingly the electric conductive portions 221 continuously contacts the contacts 227. Each of the contacts 227 on the contact substrate 225 is electrically connected to a conductive trace (not shown) mounted on the bottom surface of the substrate. This conductive trace is electrically connected to the control substrate 201 through a cable 231 and physically fastened to the control substrate 201 with screws 233 or the like.

The conductive portion 221 is connected at one end of a respective electromagnetic coil 219. The control substrate 201 determines activation of the individual electromagnetic coils 219 and effects the determination through the use of an electric signal to be transmitted to the respective contacts 227 via a cable 231 which is connected to the control substrate 201.

Next, a description of a second embodiment of the present invention will be given. As the disk driving mechanism of the second embodiment is similar to the first embodiment except the configuration of the magnetic-field-applying mechanism, only the magnetic-field-applying mechanism will be described in the following.

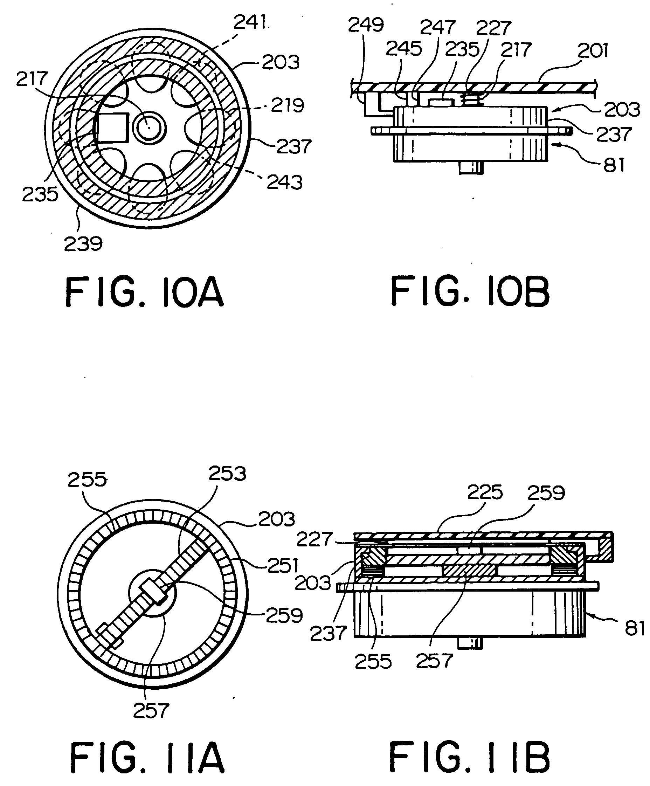

Referring now to Figs. 10A and 10B, a switching element 235 of a semiconductor which is adapted to determine which electromagnetic coil 219 should be activated is mounted on the bottom surface of the main body of a magnetic-field-applying mechanism 203. A conductive trace 239 is formed along the circumference of a circle concentrically around the switching element 235 and upon an outer circumferential surface 237 of the main body of the magnetic-field-applying mechanism 203. Further, other conductive traces 241 and 243 are also formed concentrically around the center axis 217 on the top surface of the a magnetic-field-applying mechanism 203. Contacts 256, 247, and 249 intended for connection with these conductive patters 241, 243, and 239 are formed so as to directly project from the control substrate 201.

In accordance with the second embodiment, the contact substrate 225 can be eliminated because a power wire supply line is connected to the conductive trace 239 located at the outer circumference through the center axis 217 made of metal, while a signal line is connected via contacts 245 and 247 and the conductive traces 241 and 243.

The control substrate 225 directly supplies an operation signal. The switching element operates in response to the operation signal, and in turn, selectively operates the electromagnetic coil in order to from a desired magnetic field pattern.

Next, a description of a disk driving mechanism in accordance with a third embodiment of the present invention will be given.

A disk driving mechanism in accordance with the third embodiment of the present invention is similar to that of the first and second embodiments except for the magnetic-field-applying mechanism, and for this reason, a description will be given only to the magnetic-field-applying mechanism thereof.

Referring now to Figs. 11A and 11B, the magnetic-field-applying mechanism 203 comprise a ring member 251 which is circumferentially movable, and a diameter member 253 which extends along the diameter of the ring member and whose opposite ends are secured to the ring member 251.

The ring member 251 is circumferentially rotated and stopped at a desired position, for example, by an ultrasonic motor 255 which employs a piezoelectric element or the like.

On the other hand, a disk-shaped permanent magnet 257 is suspended from the diameter member 253 by a suspension member 259. The suspension member 259 or diameter member 253 is, for example, comprised of a linear ultrasonic motor or the like which employs a piezoelectric element, etc., which enables the member to be moved in the diameter direction and stopped at a desired position.

Accordingly, if the conductive trace similar to that shown in Figs. 10A and 10B are formed on the top surface of the magnetic-field-applying mechanism and connected with the diameter member 253 or the ring member 251, the permanent magnet is allowed to be stopped at a desired position in response to the drive signal from the control substrate 201 so that a desired magnetic field pattern can be formed.

A description of a magnetic-field-applying mechanism of the disk driving mechanism in accordance with a fourth embodiment of the present invention will be given next.

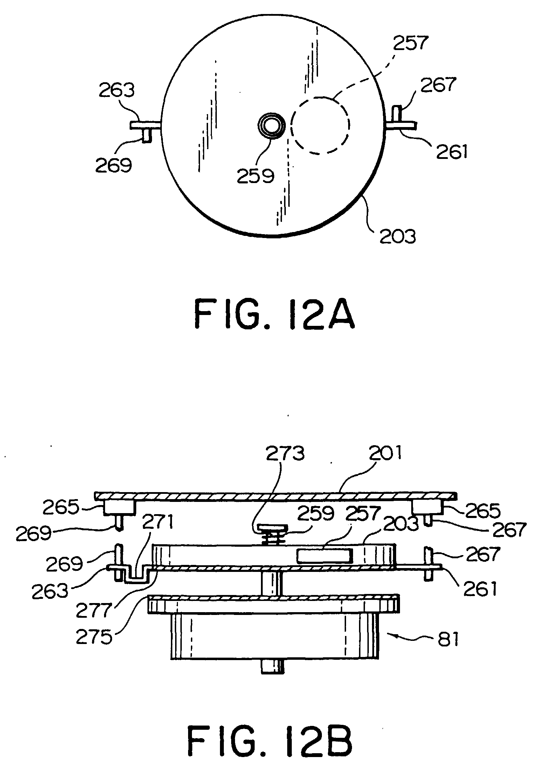

Referring now to Figs. 12A and 12B, a disk driving mechanism in accordance with the fourth embodiment of the present invention has a magnetic-field-applying mechanism 203 which is formed such that the magnetic-field-applying mechanism 203 is removable in an axial direction (i.e. vertically). A permanent magnet disk 257 is fixed at a desired position in the main body of the disk-shaped magnetic-field-applying mechanism 203. Further, a pair of bar-like stoppers 261 and 263 which project outwardly are provided both sides of the main body of the magnetic-field-apply mechanism 203.

These stoppers 261 and 263 are mounted on the control substrate 201 and stopped by pawl members 267 and 269 which are adapted to be movable downward along an arc from the control substrate 225 with the aid of electromagnetic actuators 265, 265. In the present embodiment, the stopper 261 is formed so that, as the main body of the magnetic-field-applying mechanism 203 rotates around the center axis 259, the stopper 261 engages the pawl member 267 and stops when the stopper 261 gets to the position of the pawl member 267, whereas to move past the pawl member 269 with no engagement because the tip of the stopper 261 is more closely located to the center position than the pawl 269. On the other hand, the stopper 263 has a recess at a region which would otherwise be struck by the pawl member 267, whereby as the main body of the magnetic-field-applying mechanism 203 rotates around the center axis, the stopper 261 moves past the pawl member 267 but engages the pawl member 269 and stops. Further, the pawl members 267 and 269 have a groove which is gradually rising in the rotating direction of the stoppers 261, 263 or a slope, and therefore, when engaged, the pawl members act to separate the main body of the magnetic-field-applying mechanism 203 from the clamp 81 for upward movement.

In addition, actions of the pawl members 267 and 269 are adapted to be respectively controlled by an electromagnetic actuator 265 which is arranged to surround the base of each pawl member.

Next, a description of an action of the magnetic-field-applying mechanism in accordance with the fourth embodiment will be given.

First, an optical sensor (not shown) identifies the mass eccentric portion of the disk clamp 81 under rotation. Then the actuator 265 is actuated to drop the retained main body of the magnetic-field-applying mechanism 203 toward the clamp 81 so that the permanent magnet is positioned to a proper location with respect to the mass eccentric portion and the center axis 259. At this time, a spring 273 positioned at one end of the center axis 258 urges the magnetic-field-applying mechanism 258 downward, and accordingly, whereby the magnetic-field-applying mechanism 258 rapidly drops and is combined with the disk clamp 81. In this state, the disk clamp 81 and the main body of the magnetic-field-applying mechanism 203 have friction members 275 and 277 respectively on the contact surfaces thereof. Consequently, the main body of the magnetic-field-applying mechanism 203 does not go into freewheeling but rotates together with the disk clamp 81 as one. At this time, the permanent magnet within the main body of the magnetic-field-applying mechanism 203 attracts the steel balls accommodated in the disk clamp 81 to cause movement in order to compensate for the mass eccentricity of the disk clamp 81.

On the other hand, in order to stop the main body of the magnetic-field-applying mechanism 203, the pawl members 267 are moved along an arc so as to extend downward and engaged with the stoppers 261 and 263 to rise the stoppers 261 and 263. Accordingly, the main body of the magnetic-field-applying mechanism 203 is separated from the disk clamp 81 and stopped.

Next, a description of the disk driving mechanism in accordance with the fifth embodiment of the present invention will be given.

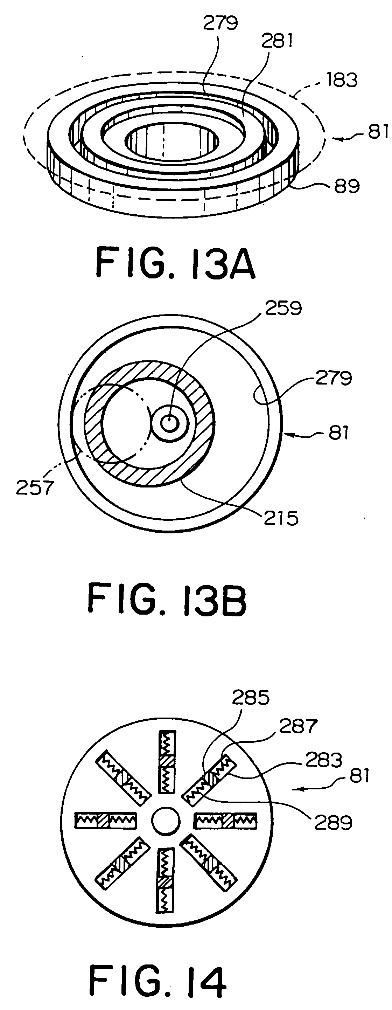

Referring now to Figs. 13A and 13B, these figures show a disk clamp of the disk drive mechanism in accordance with the fifth embodiment, omitting the upper flange portion. The internal structure of this disk clamp is different from that of the first embodiment which is illustrated in connection with Fig. 8.

More specifically, the disk clamp 81 has therein an annular accommodation portion which includes a ring 281 made of a magnetic material, such as steel or the like.

As is seen from Fig. 13B, when the permanent magnet 259 of the main body of the magnetic-field-applying mechanism 203 as mentioned in connection with the fourth and fifth embodiments is positioned on the disk clamp 81, the ring 281 is attracted to the magnet 259 and accordingly moved in the diameter direction around the center axis. This allows for compensation of the mass eccentricity.

Next, a description of the disk driving mechanism in accordance with the sixth embodiment of the present invention will be given.

Referring now to Fig. 14, the disk clamp 81 of the sixth embodiment comprises a groove 283 which is radially provided within the disk clamp 81, a steel weight 285 accommodated in the groove 283, and coil springs 287 and 289 each of which are connected by both ends in the radial direction in the groove 283.

In the sixth embodiment, similar to the fifth embodiment, the mass eccentricity is compensated when the application of the magnetic field completes after the radial movement of the weight 285 due to the application of the magnetic field by the magnetic-field-applying mechanism 203, or when the weight 284 is placed back in position by the coil springs 287 and 289.

Next, a description of the disk driving mechanism in accordance with the seventh embodiment of the present invention will be given.

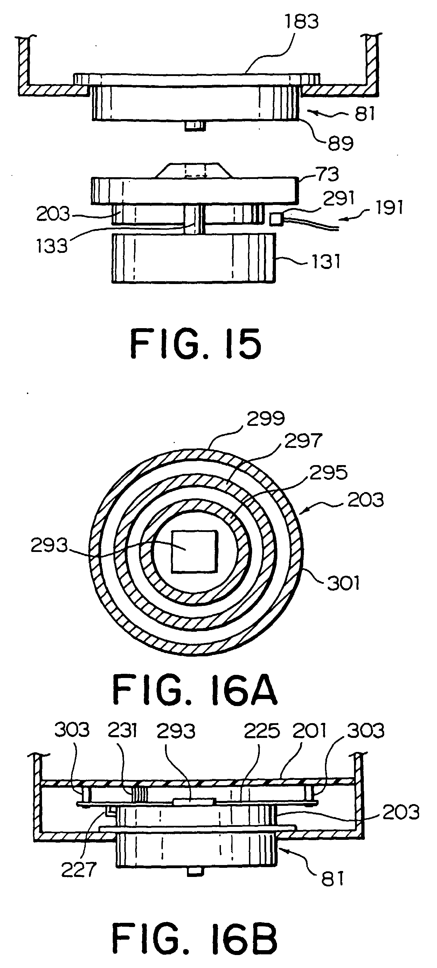

In the first to sixth embodiments mentioned above, the magnetic-field-applying mechanism is placed at the disk clamp 81 side. The seventh embodiment is different from these embodiments in that the magnetic-field-applying mechanism is placed at the turntable side 73 as shown in Fig. 15.

That is, in the driving section 191, an optical sensor 291 is disposed under the turntable 73 and the main body of the magnetic-field-applying mechanism 203 is mounted on the bottom surface of the turntable 73. Further, the magnetic material as mentioned above is contained in the outer radius region of the turntable 73. Operations of this optical sensor 291 and the main body of the magnetic-field-applying mechanism 203 are similar to those of the aforementioned embodiments, and for this reason are not described.

Next, a description of the disk driving mechanism in accordance with the eighth embodiment of the present invention will be given.

As is shown in Figs. 16A and 16B, an acceleration sensor 293 is attached and positioned on the top surface of the main body of the magnetic-field-applying mechanism 203 which is fixed onto the disk clamp 181 of the clamp section. Further, conductive traces 295, 297, and 299 are formed around the acceleration sensor 293 and a conductive trace 301 is formed on the outer surface. These conductive traces are adapted to electrically connect the acceleration sensor 201 and the control substrate 291 when they are biased by the contact substrate 225 disposed on the control substrate 201. By providing the acceleration sensor 293, the optical sensor can be eliminated. When an optical disk is driven, the control substrate 201 determine the position of the mass eccentricity based on the acceleration detected by the acceleration sensor 293. A contact substrate 225 is mounted on the bottom surface of the control substrate 201. The contact substrate 225 supplies electricity to the magnetic-field-applying mechanism 203 for operations similar to those of the first, second, and fourth embodiments. Here, reference number 303 indicates a supporting member for fastening the contact substrate 225 to the control substrate 201.

Finally, a description of the disk driving mechanism of the ninth embodiment of the present invention will be given.

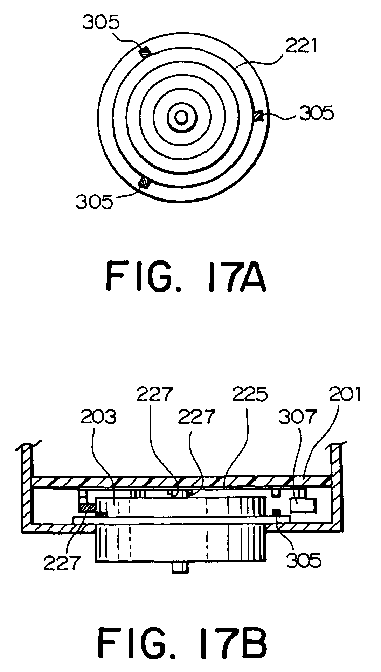

Referring to Figs. 17A and 17B, permanent magnets 305 are positioned at the outer diameter region on the top surface of the magnetic-field-applying mechanism 203 of the disk clamp 81 of the clamp section so as to spaced in an equiangular manner around the center axis. A proximity sensor 307 supplies the control substrate 201 with an electric signal having intensity representing the intensity of the magnetic field corresponding to the proximity distance to the permanent magnet.

The main body of the magnetic-field-mechanism 203 is disposed on the top surface of the disk clamp 81. On the top surface of the main body of the magnetic-field-mechanism 203, a plurality of the conductive traces or portions 221 are formed concentrically and configured to continuously contact the contacts 227 of the contact substrate 225 mounted on the bottom surface of the control substrate 201. Further, the main body of the magnetic-field-applying mechanism 203 has therein a pair of actuators to move the disk-shaped magnet within a horizontal plane, and a drive control section for actuating the pair of actuators. The control substrate 201 determine the angular position where the displacement in the radial direction is largest based on the intensity of the signals which are measured at three points on the main body of the magnetic-field-applying mechanism 203, and then supplies the main body of the magnetic-field-applying mechanism with a signal to actuate the actuators through the contact substrate 225 so as to cancel such displacement. Based on this signal, the drive control section in the main body of the magnetic-field-applying mechanism 203 actuates these two actuators (not shown) in the main body of the magnetic-field-applying mechanism 203 in order to move the permanent magnet. It should be noted that during detection of mass eccentricity, the permanent magnet is adapted to be placed at the center portion of the main body of the magnetic-field-applying mechanism 203 and does not exert an influence on the detecting operations.

As described above, such movement of the permanent magnet can cancel the mass eccentricity by attracting steel balls within the disk clamp 81.

While the embodiments of the present invention have been described in which weights are arranged, similar effect can be obtained when another fluid such as magnetic fluid is encapsulated within the disk clamp 81 or turntable 73.

Further, in the present embodiments, the weights are adapted to be moved through the use of a magnetic field as a mass eccentricity prevention mechanism, however, these weights can be moved by a mechanical mechanism as well.

Still further, while the present embodiments establish the electric connection between the main body 11 of the magnetic-field-applying mechanism and control substrate 8 through the use of contacts and conductive traces, similar configurations can be obtained by providing a transmit/receive coils at both main body 11 and substrate 8 and employing a non-contact type contact which uses an electromagnetic wave for transmitting and receiving electric power and signals.

Still further, in the present embodiments, a magnetic-field-applying mechanism is disposed on the back side of the disk clamp 81 or turntable 73, however, it is apparent that a similar effect can be produced when one of the disk clamp 81 or turntable 73 includes therein a movable weight and the other includes therein a magnetic-field-applying mechanism.

As is apparent from the above description, in accordance with the present invention, a disk drive device with higher stability, wherein a stable high-speed playback or writing is ensured even with a mass-eccentric disk, can be provided by detecting the mass eccentricity and restraining the member to be compensated for the mass eccentricity by mass-eccentricity-compensation means such as a magnetic-field-applying mechanism or the like.

Finally, it is also to be noted that various modifications or changes can be made without departing from the scope of the present invention, which scope is determined only by the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

In order to provide a disk drive device with higher stability wherein a stable high-speed playback or writing is ensured upon a mass eccentric disk, the disk drive device comprises mass-eccentricity detection means for detecting a mass-eccentric rotation of the disk clamp or disk itself and mass-eccentricity compensation means for compensating the mass eccentricity based on a mass-eccentricity detection signal from the mass-eccentricity detection means.

## Claims

1. A disk drive device for playing back or recording information from a disk, comprising a rotating shaft of a spindle motor, a turntable provided at one end of said rotating shaft, and a clamp which is arranged to be opposed to said turntable, said turntable and said clamp holding the center portion of said disk therebetween when loading the disk, the disk drive device further comprising:
mass eccentricity detection means for detecting a mass-eccentric rotation of the disk clamp or the disk; and
mass eccentricity compensation means for compensating the mass eccentricity based on a mass eccentricity detection signal from said mass eccentricity detection means.

2. The disk drive unit as claimed in claim 1, wherein said mass eccentricity detection means detects the mass eccentricity of said disk clamp or the mass eccentricity of said turn table.

3. The disk drive unit as claimed in claim 2, wherein said mass eccentricity detection means uses at least one of an optical sensor, acceleration sensor, and magnetic sensor.

4. The disk drive unit as claimed in claim 1, wherein said mass eccentricity compensation means compensates for the mass eccentricity through said disk clamp or said turntable.

5. The disk drive unit as claimed in claim 4, wherein said mass eccentricity compensation means comprises a weight member disposed within said disk clamp or within said turntable, and a magnetic-field-applying means for moving said weight member in the direction opposite to the position of the mass eccentricity by attracting said weight member.

6. The disk drive unit as claimed in claim 5, wherein said weight member consists of a spherical or annular magnetic material or consists of magnetic fluid.

7. The disk drive unit as claimed in claim 5, wherein said magnetic-field-applying means comprises a permanent magnet or electromagnet provided in said disk clamp or said turntable.

8. The disk drive unit as claimed in claim 7, wherein said magnetic-field-applying means comprises said permanent magnet, and positioning means for positioning said permanent magnet on said disk clamp or on said turn table.

9. The disk drive unit as claimed in claim 7, wherein said magnetic-field-applying means comprises a plurality of said electromagnets which are arranged at an even angular space around a center axis of said disk clamp or said turntable, and a magnetic-field-forming member for forming a magnetic field pattern of said plurality of electromagnets such that said plurality of the electromagnets move said weight member to compensate for the mass eccentricity.

10. The disk drive unit as claimed in claim 1, wherein said disk clamp and said turntable have a fitting member at the center thereof respectively in order to be fitted with each other.
